# EUROPEAN PATENT APPLICATION

(11) **EP 1 843 524 A1**
(43) Date of publication of application: **10.10.2007**
(21) Application number: 07007001.6
(22) Date of filing: 03.04.2007
(51) Int. Cl.: H04L 12/28

(54) **Locating devices**

(30) Priority: 03.04.2006 US 397831
(71) Applicant: Bridgeport Networks, Inc., Chicago IL 60601 (US)
(72) Inventor: Aborn, Justin A., Hingham, Massachusetts 02043 (US)
(74) Representative: Müller-Boré & Partner Patentanwälte

(57) **Abstract**

Location data associating data network access devices with corresponding physical locations is maintained, a voice service from a mobile device served by a data network access device is accessed, and location data during the voice service is accessed to determine if the data network access device has a corresponding physical location in the location data.

## Description

### BACKGROUND

This description relates to data verification.

When handling emergency voice calls, which in the United States are often referred to as "911" calls, voice service network operators are sometimes required by law to allow public safety officials answering the call to determine a caller's physical location. This information is used to determine which police, fire, or ambulance departments serve the caller's location and where exactly to direct them.

When voice service is provided to a fixed location using a fixed landline, a caller's physical address can be looked up based on the caller's telephone number.

In cellular and IP-based voice services the telephone number is not fixed to a physical location. In cellular networks, one approach to determining a telephone's physical location makes use of GPS (Global Positioning System) techniques. Such techniques are not always effective inside structures that limit GPS satellite signals from reaching the telephone.

### SUMMARY

In a general aspect, in Internet Protocol (IP) networks, an unchanging Media Access Control (MAC) address of a relatively fixed network access device (e.g., a wireless access point, an Ethernet switch, or a router) serving a caller's client device or mobile station can be used as a location database look up key. For example, an IP-based emergency call initiated from a mobile station is located based on a physical association associated with the serving MAC address that is determined prior to or during setup signaling for the emergency call.

One way to populate a location database is to add a location entry at the time a subscriber purchases voice service. When the service is provisioned, the MAC address that will be useful for location determination is identified and added to the database. Often such a MAC address is associated with an Internet access device, such as a user's home wireless network access point. The subscriber works with the network operator to configure a location to correspond to this MAC address.

In another approach, a third party surveys a geographic area (for example, driving a "sniffer" van around a city), and records locations and corresponding MAC addresses of the wireless access points found.

In general, in one aspect, location data associating data network access devices with corresponding physical locations is maintained, a voice service from a mobile device served by a data network access device is accessed, and location data is accessed during the voice service to determine if the data network access device has a corresponding physical location in the location data.

Implements may include one or more of the following features. A physical location for the mobile device using the location data is determined. The location data associates addresses of the access devices and the corresponding physical locations. The location data associates data link layer addresses of the access devices and corresponding physical locations. The data network access devices include local area network access devices. The local area network access devices include wireless access points. Accessing the voice service includes establishing a communication session between the mobile device and network element via the data network access device. Establishing the communication session includes establishing a packet-based voice call. Establishing the communication session includes establishing a Session Initiation Protocol (SIP) session. Results of the determination are provided to an entity. Maintaining location data comprises requesting information from an entity. The information is used to populate a database.

In general, in one aspect, location data associating data network access devices with corresponding physical locations is maintained, a voice service to a mobile device served by a data network access device is provided, and the location data is accessed during the voice service to determine if the data network access device has a corresponding physical location in the location data.

Among the advantages of the solution described here are one or more of the following. Information directly applicable to the client's voice service, such as whether or not an emergency call will benefit from automatic location lookups, is discovered dynamically. The solution exploits information regarding the history of network access points that a user actually uses, rather than only relying on a single situation existing at service provisioning time. The solution is applicable to a wide variety of IP access systems, including wireless and wired systems, such as systems that use addressing systems analogous to, but different from MAC addresses. A service provider can discover access systems that are not yet, but probably should be, in the location database. Emergency call processing logic can take location information status into account, perhaps allowing the system to decide that possible alternatives should be pursued.

A user can respond to his current information status. On a non-emergency basis, the user can inform his service provider of locations he would want to be used to populate the database, possibly populating the information himself. On an emergency basis, the user could respond by modifying how he decides to place an emergency call, for example, by using a particular phone if he knows that the location function is critical and available on that phone but not on another.

Other features and advantages will be apparent from the description and the claims.

### DESCRIPTION

FIG 1 shows a network.
FIG 2 shows a flow chart.

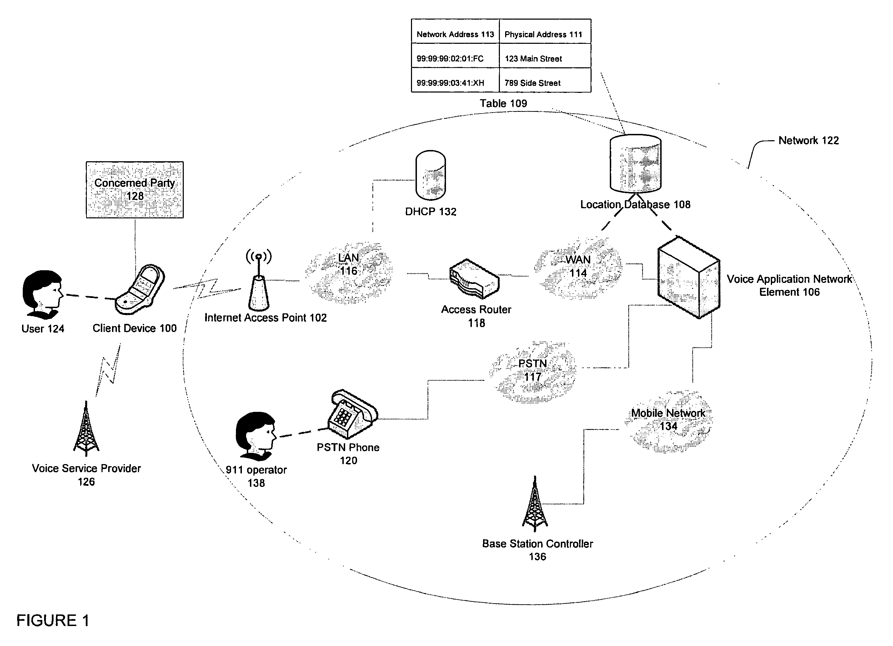

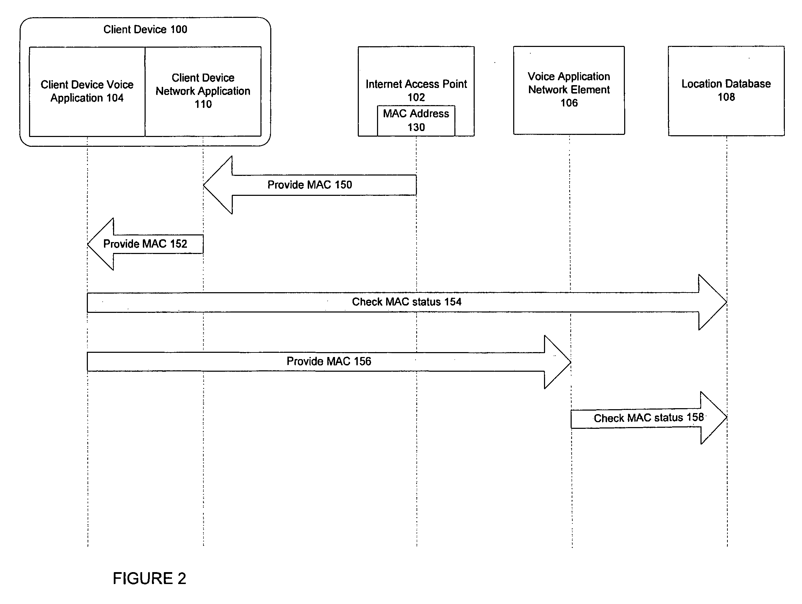

Referring to figures 1 and 2, as part of the process of voice service access, a location database 108 in a network 122 is populated, verified, updated, and accessed. The process of voice service access includes, for example, using a mobile station or cellular phone to communicate with a network. In particular, a user 124 can communicate with a network using an IP-based voice service such that the user's data traffic and voice traffic are routed over the internet instead of over a radio network or PSTN.

In some examples, the location database 108 includes emergency calling location data that supports emergency voice call service. For example, when a user makes a emergency call from a voice client device 100 that is served by an access point 102, the emergency voice call service uses the association of the MAC address of the access point 102 and a physical location in the location database 108 to determine the physical location of the user making the emergency call. By checking whether or not a MAC address 130 of an Internet access point 102 serving a voice client device 100 is in the emergency calling location data, a status of the emergency service location information may be indicated to a user 124, the voice service provider 126, and/or other concerned parties 128. Such a status check indicates whether an access point 102 has any kind of entry in the location database 108. This type of check may enable populating a location database 108 or detecting a need to populate a location database 108 with certain data, for example, a table 109 mapping a physical address 111 to a network address 113. If a MAC address 130 is not in the location database 108, the concerned parties can update the database 108 with location information for that MAC address 130.

As shown in Figure 1, in some examples, a user 124 makes a phone call on a client device 100 which communicates over an IP network through an access point 102. In some examples, the client device 100 makes a SIP-based call or a UMA-based call through the access point 102. In some examples, the client device 100 is a UMA-enabled phone. In some examples, the access point 102 solicits a local IP address for the client device 100 from a Dynamic Host Configuration Protocol (DHCP) server 132 over a Local Area Network (LAN) 116. Once the DHCP assigns an IP address to the client device 100, the client device begins transmitting to the LAN network 116 through the access point 102 using Ethernet packets. The LAN 116 is connected to a Wide Area Network (WAN) 114 though an access router 118. Using the WAN 114, the client device 100 can communicate directly with a location database 108. The client device 100 can also communicate with a voice application network element 106 such as a media gateway.

The voice application network element 106 can also communicate directly with the location database 108. The voice application network element 106 also performs standard networking functions, such as transferring voice and network data to a PSTN 117 or a mobile network 134. The PSTN 117 can then communicate with a PSTN telephone 120, such as that of a 911 operator 138. The mobile network 134 can communicate with a base station controller 136, which will transfer the call accordingly. Other networking arrangements are possible.

As shown in Figure 2, the client device 100 receives a MAC address 130 of a device serving as its access point 102 (Step 150). This is usually done by the client device 100 attempting to contact a Default Gateway aspect of its access point 102. The client device 100 is usually given the IP address 131 of the Default Gateway aspect through a Dynamic Host Configuration Protocol (DHCP) server 132, but other methods are possible. In some examples, the client device 100 determines the MAC address 130 of the access point 102 by applying a Address Resolution Protocol (ARP) to the Default Gateway IP address 131. Following ARP protocol, the client device 100 performs an Ethernet-broadcast of an ARP packet listing the IP address 131. Such a packet requests that the owner of the IP address 131 send an ARP response packet. Such an ARP response packet reports the MAC address that corresponds to the IP address 131. In such a situation, the Default Gateway's MAC address can be called the serving MAC address 130.

The network application 110 of the client device 100 provides the serving MAC address 130 to the voice application 104 of the client device 100 (Step 152).

In some examples, the voice application 104 makes location-lookup-information-verification one of the steps of its initialization process either at or about the time a client device 100 accesses the voice application network element 106; sometimes called "registration" or "network attachment" time. In some examples, the voice application 104 may itself check the serving MAC address's 130 status in the location database 108 (Step 154). In some examples, the client's voice application 104 may send the serving MAC address to the voice application network element 106 (Step 156), which performs the check of the location database on behalf of the client (Step 158).

In some examples, the location check may take the form of a database lookup of the MAC address 130 currently serving the client device 100. However, such lookups can be implemented other ways. In some examples, the check may take the form of placing a "test" call to the Voice Application Network Element 106 that communicates the serving MAC address 130 in the same fashion a real emergency call would. The Voice Application Network Element 106 can query the database 108, which might return a simple "okay" versus "not okay" status to the client device or to the Voice Application Network Element 106, indicating whether the serving MAC address 130 has an entry in the location database 108.

In some examples, the check may be made on a non-emergency basis to avoid burdening mission critical components. The non-emergency basis may be effected by marking the query with a non-emergency indication or by making such a query through equipment allocated specifically for this purpose.

Some embodiments may also include a process of populating the database 108 with location information. This can be done in a variety of ways. In some examples, the network 122 notifies the user 124 that a location check has returned a "not okay" status for a particular MAC address 130, indicating that the MAC address does not have an entry in the database 108. Alternatively, the client device 100 can also notify the user 124 that its serving MAC address 130 is not in the location database 108. The user 124 can then affirmatively respond with a preferred physical location for that MAC address.

If the check is made during an emergency call, a 911 operator 138 could be also be notified that the MAC address 130 is not in the location database 108. The 911 operator could then verbally request a location from the user 124 and input the corresponding data in the location database 108.

In some examples, the location check is performed as part of an authentication process for a private IP network. The user 124 is notified that he should input a location (possibly in addition to a password) before he is able to access the private network. This location information is then used to populate the location database 108.

In other examples, the network 122 uses a triangulation or similar approach to determine independently a user's 124 physical location. The network inputs this data into the location database 108 without any affirmative action on the part of the user 124.

In another embodiment, the location check is performed whenever the serving MAC address 103 changes for any reason.

Various embodiments can be implemented in hardware or in software, or a combination of both hardware and software. Software components can include instructions, stored on computer-readable media, such a non-volatile semiconductor memory and magnetic or optical disks. The instructions can be for execution on various types of physical or virtual processors, including general purpose computers, special purpose controllers, signal processing devices, instruction interpreters and virtual machines.

Other embodiments are within the scope of the following claims.

## Claims

1. A method comprising:
maintaining location data associating data network access devices with corresponding physical locations;
accessing a voice service from a mobile device served by a data network access device;
accessing the location data during the voice service to determine if the data network access device has a corresponding physical location in the location data.

2. The method of claim 1 further comprising:
determining a physical location for the mobile device using the location data.

3. The method of claim 1 or 2, wherein the location data associates addresses of the access devices and the corresponding physical locations.

4. The method of claim 3 wherein the location data associates data link layer addresses of the access devices and corresponding physical locations.

5. The method of any one of the preceding claims, wherein the data network access devices include local area network access devices.

6. The method of claim 5 wherein the local area network access devices include wireless access points.

7. The method of any one of the preceding claims, wherein accessing the voice service includes establishing a communication session between the mobile device and network element via the data network access device.

8. The method of claim 7 wherein establishing the communication session includes establishing a packet-based voice call.

9. The method of claim 7 or 8, wherein establishing the communication session includes establishing a Session Initiation Protocol (SIP) session.

10. The method of any one of the preceding claims, further comprising providing results of the determination to an entity.

11. The method of any one of the preceding claims, wherein maintaining location data comprises requesting information from an entity.

12. The method of claim 11 wherein the information is used to populate a database.

13. A method comprising:
maintaining location data associating data network access devices with corresponding physical locations;
providing a voice service to a mobile device served by a data network access device; and
accessing the location data during the voice service to determine if the data network access device has a corresponding physical location in the location data.

14. Software product, particularly stored on computer-readable media, comprising instructions for causing a data processing system to:
maintain location data associating data network access devices with corresponding physical locations;
provide a voice service to a mobile device served by a data network access device; and
access the location data during the voice service to determine if the data network access device has a corresponding physical location in the location data.
